# EUROPEAN PATENT APPLICATION

(11) **EP 4 657 317 A1**
(43) Date of publication of application: **03.12.2025**
(21) Application number: 24305850.0
(22) Date of filing: 29.05.2024
(51) Int. Cl.: G06N 3/045, G06N 3/098

(54) **FEDERATED LEARNING OF A DEEP LEARNING MODEL**

(71) Applicant: Université de Bourgogne, 21000 Dijon (FR)
(72) Inventor: SAADALLAH, Ahmed, Nevers (FR); DOUAIDI, Lydia, Nevers (FR); SENOUCI, Sidi Mohammed, Nevers (FR)
(74) Representative: Bandpay & Greuter

(57) **Abstract**

The disclosure notably relates to a computer-implemented method for federated learning a deep learning model. The method is implemented on a system comprising a central server and n entities. The method comprises, iteratively repeating, until convergence, the following steps: by each entity i, training (S22) the initial deep learning model (M) sent by the central server with the respective dataset (*Dᵢ*) of the entity and with each sub-dataset j, building (S30), by the server, a training dataset of training samples from all the obtained sets of weights, training (S40) a regression model based on the built training dataset, predicting (S50), using the trained regression model, a set of weights (W) and sending (S60) the predicted set of weights (W) to each entity for the next iteration. Such a method forms an improved solution for federated learning a deep learning model.

## Description

### TECHNICAL FIELD

The disclosure relates to the field of computer programs and systems, and more specifically to a method, system and program for federated learning a deep learning model.

### BACKGROUND

Federated learning (also known as collaborative learning) is a sub-field of machine learning focusing on settings in which multiple entities (often also referred to as clients) collaboratively train a model while ensuring that their data remains decentralized. Federated learning aims at training a machine learning algorithm, for instance deep neural networks, on multiple local datasets contained in local entities without explicitly exchanging data samples. The concept of Federated Learning was originally introduced to improve text prediction by using machine learning models trained on multiple devices without the need to send personal data to a central server. The central server receives only the weights of the local models trained by each client, aggregating them using an aggregation function to build a global model that converges. An existing method for federated learning is based on the Federated Averaging (FedAvg) algorithm which is used to combine the weights (gradients) reviewed from all the entities.

This decentralized approach to machine learning model training has since found applications in a variety of fields, including industry, as it offers data confidentiality and security while reducing the transfer of large amounts of data. However, the presence of heterogeneous data, known as non-independent and non-identically distributed (non-IID) data, among local clients can affect the performance of the global model when using the FedAvg algorithm (as it averages all the revised client weights). As a result, the global model may perform less well than the centrally trained model (without using federation learning).

To solve this problem, various aggregation algorithms have been proposed in the literature to improve the performance of the federation model in the presence of non-IID data found in real-world applications. One of the most popular methods is based on the Federated Proximal (FedProx) algorithm, which is an extension of the FedAvg algorithm. The FedProx algorithm improves the objective function by adding a proximal term during local training. This proximal term limits the distance between the local model and the global model, encouraging local models to remain close to the global model. Other existing methods may also use the SCAFFOLD algorithm, which integrates control variables on both server and client sides. These control variables play a crucial role in estimating the update direction of the global model, as well as the update direction for each client. Subsequently, the local training derivative is approximated by calculating the difference between these two update directions. Compared to the FedAvg algorithm, the SCAFFOLD algorithm results in a doubling of the communication size per iteration, as it adds control variables. FedNova algorithm was also introduced as an enhancement to the FedAvg algorithm, considering that different parties can perform different numbers of local steps at each iteration.

These existing algorithms use different aggregation methods to meet the challenge posed by non-IID data in Federated learning. However, they do not effectively address the problem of non-IID data, particularly in terms of convergence and accuracy. Moreover, they are specific to their respective contexts and may not be effective in various real-world application domains.

Within this context, there is still a need for an improved method for federated learning a deep learning model.

### SUMMARY

It is therefore provided a computer-implemented method for federated learning a deep learning model (hereinafter referred to as the "learning method" or simply the "method"). The method is implemented on a system comprising a central server and *n* entities. Each entity stores a respective dataset (*Dᵢ*). The method comprises sending, by the central server, an initial deep learning model (*M*) to each of the *n* entities. The method comprises, iteratively repeating, until convergence, the following steps. A first step comprises performing, by each entity *i* of at least a portion (*m*) of the *n* entities, the following three sub-steps. A first sub-step comprises partitioning the respective dataset (*Dᵢ*) of the entity *i* into a set of *m* sub-datasets (*D*_{*i*1} U *D*_{*i*2} U ... ∪ 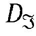 ). A second sub-step comprises training the initial deep learning model (*M*) sent by the central server with the respective dataset (*Dᵢ*) of the entity, thereby obtaining a first deep learning model (*Mᵢ*) having a first set of weights (*Wᵢ*), and with each sub-dataset *j* of the sub-datasets (*D*_{*i*1} ∪ *D*_{*i*2} ∪ ... ∪ 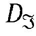 ), thereby obtaining m respective second deep learning models (*M_{i,j}* = *M*_{*i*1} ∪ *M*_{*i*2} U ... ∪ 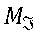 ) each having a respective second set of weights (*W_{i,j}* = *W*_{*i*1} ∪ *W*_{*i*2} U ... U 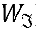 ). A third sub-step comprises sending the first set of weights (*Wᵢ*) and the respective second sets of weights (*W*_{*i*1} ∪ *W*_{*i*2} U ... ∪ 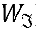 ) obtained for the entity *i* to the central server. A second step comprises building, by the server, a training dataset of training samples from all the sets of weights sent by the at least a portion (*m*) of the *n* entities. The training dataset comprising, for each entity *i* of the at least a portion (*m*) of the *n* entities, a respective training sample including the respective second sets of weights (*W*_{*i*1} ∪ *Wᵢ₂* ∪ ... ∪ 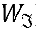 ) sent by the entity i as features and the first set of weights (*Wᵢ*) sent by the entity i as target. A third step comprises training a regression model based on the built training dataset of training samples. A fourth step comprises predicting, using the trained regression model, a set of weights (*W*) based on all the first sets of weights (*Wᵢ*) sent by the entities. A fifth step comprises sending the predicted set of weights (W) to each entity for updating the first and the m second deep learning models (*Mᵢ, M_{i,j}*) for the next iteration.

The method may comprise one or more of the following:
- the respective dataset (*Dᵢ*) stored by each entity is confidential;
- the regression model is an aggregation artificial neural network (ANN);
- the updating of the first and the second deep learning models (*Mᵢ, M_{i,j}*) for the next iteration comprises replacing the first and the second sets of weights by the predicted set of weights (*W*);
- for at least one first iteration, the at least a portion (*m*) of the *n* entities includes all of the *n* entities (*m* = *n*);
- for at least one second iteration, one or more entities of the *n* entities are not included in the at least a portion (*m*) of the *n* entities (*m* < *n),* the method further comprises, for each of the at least one second iteration, selecting the portion (*m*) of the *n* entities;
- the partitioning (S21) the respective dataset (*Dᵢ*) of the entity *i* is performed randomly;
- the training (S40) the regression model comprises, at each iteration:
   ∘ initializing the regression model; and
   ∘ training the initialized regression model; and/or
- at each iteration, the regression is trained from the regression model resulting from the last iteration.

It is also provided a method of use of a deep learning model machine-learnt according to the method (hereinafter referred to as the using method).

It is further provided a computer program comprising instructions which, when the program is executed by a computer, cause the computer to carry out the learning method and/or the using method.

It is further provided a computer readable storage medium having recorded thereon the computer program.

It is further provided a central server comprising means for carrying out (e.g., one or more steps of) the learning method and/or the using method.

It is further provided an entity comprising means for carrying out (e.g., one or more steps of) the learning method and/or the using method.

It is further provided a system comprising a central server and n entities. The system is configured for implementing the learning method and/or the using method.

### BRIEF DESCRIPTION OF THE DRAWINGS

Non-limiting examples will now be described in reference to the accompanying drawings, where:
- FIGs. 1 and 2 show examples of flowcharts of the learning method;
- FIG. 3 shows an example of datasets of three entities;
- FIGs. 4 and 5 show examples of results using the learning and using methods for the example of datasets of FIG. 3; and
- FIG. 6 shows an example of the system.

### DETAILED DESCRIPTION

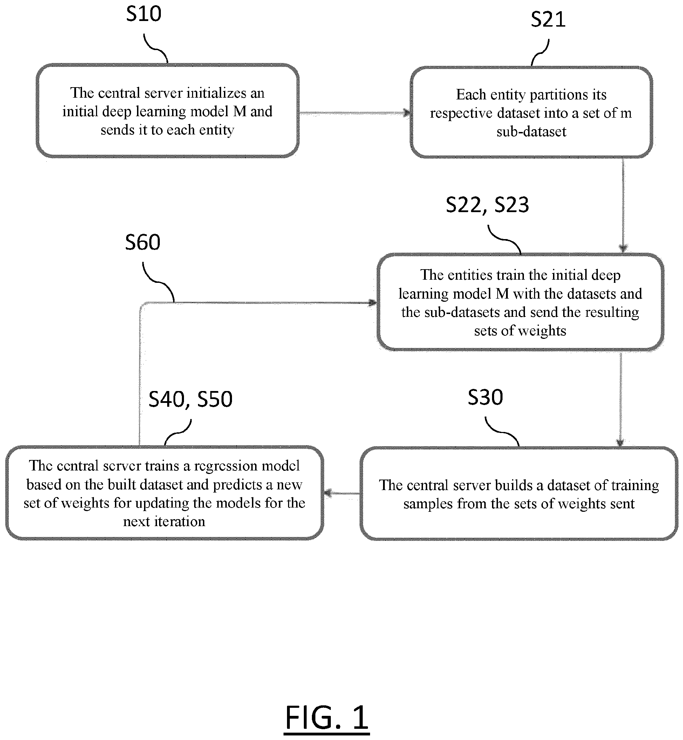

With reference to the flowchart of FIG. 1, it is proposed a computer-implemented method for federated learning a deep learning model (hereinafter referred to as the "learning method" or simply the "method"). The method is implemented on a system comprising a central server and *n* entities. Each entity stores a respective dataset (*Dᵢ*). The method comprises sending S10, by the central server, an initial deep learning model *(M)* to each of the *n* entities. The method comprises, iteratively repeating, until convergence, the following steps. A first step comprises performing, by each entity *i* of at least a portion (*m*) of the *n* entities, the following three sub-steps. A first sub-step comprises partitioning S21 the respective dataset (*Dᵢ*) of the entity *i* into a set of *m* sub-datasets (*D*_{*i*1} U *D*_{*i*2} U ... ∪ 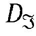 ). A second sub-step comprises training S22 the initial deep learning model (M) sent by the central server with the respective dataset (*Dᵢ*) of the entity, thereby obtaining a first deep learning model (*Mᵢ*) having a first set of weights (*Wᵢ*), and with each sub-dataset *j* of the sub-datasets (*D*_{*i*1} U *D*_{*i*2} U ... ∪ 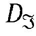 ), thereby obtaining *m* respective second deep learning models (*M_{i,j}* = *M*_{*i*1} U *Mᵢ₂* U ... ∪ 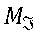 ) each having a respective second set of weights (*W_{i,j}* = *W*_{*i*1} U *W*_{*i*2} U ... ∪ 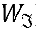 ). A third sub-step comprises sending S23 the first set of weights (*Wᵢ*) and the respective second sets of weights (*W*_{*i*1} U *W*_{*i*2} U ... ∪ 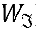 ) obtained for the entity i to the central server. A second step comprises building S30, by the server, a training dataset of training samples from all the sets of weights sent by the at least a portion (*m*) of the *n* entities. The training dataset comprising, for each entity i of the at least a portion (*m*) of the *n* entities, a respective training sample including the respective second sets of weights (*W*_{*i*1} ∪ *W*_{*i*2} ∪ ... ∪ 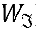 ) sent by the entity i as features and the first set of weights (*Wᵢ*) sent by the entity i as target. A third step comprises training S40 a regression model based on the built training dataset of training samples. A fourth step comprises predicting S50, using the trained regression model, a set of weights (*W*) based on all the first sets of weights (*Wᵢ*) sent by the entities. A fifth step comprises sending S60 the predicted set of weights (*W*) to each entity for updating the first and the m second deep learning models (*Mᵢ, M_{i,j}*) for the next iteration.

Such a method forms an improved solution for federated learning a deep learning model.

Notably, the method allows federating the learning of the deep learning model based the datasets of the entities, while avoiding the need for entities to share them. Indeed, each entity solely shares sets of weights with the central server, and therefore the respective dataset of each entity remains confidential.

Moreover, the method effectively solves the problem of non-IID data. Indeed, training the regression model at the server level allows finding an optimal aggregation function, and the method enables faster convergence and higher accuracy. In particular, the regression model is trained to efficiently and accurately aggregate the different sets of weights sent by each entity into a single set of weights. Indeed, at each iteration, the method builds a training dataset based on the seconds sets of weights (resulting from the partitioning) and the first set of weights, and the regression model is trained based on this training dataset. The regression model is therefore able to accurately and efficiently predict the new set of weights that is used by the models for the next iteration, which allows improving the accuracy of the resulting model at each iteration.

Furthermore, the method offers a generic approach that may be adapted to a variety of real-world application domains, regardless of the nature of the client data involved in the federation learning process. Indeed, the method is solely based on the sets of weights resulting when training the model with different datasets (the entire datasets stored by each entity or sub-datasets resulting from the partitioning). The method is therefore easily exploitable in different prediction problems. The method also allows reducing data transfer.

The learning method and/or the using method is/are computer-implemented. This means that steps (or substantially all the steps) of the learning method and/or the using method are executed by at least one computer, or any system alike. Thus, steps of the learning method and/or the using method are performed by the computer, possibly fully automatically, or, semi-automatically. In examples, the triggering of at least some of the steps of the learning method and/or the using method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the learning method and/or the using method is to perform the method with a system adapted for this purpose. For the learning method, the system may comprise a central server and *n* entities. The central server and/or the *n* entities may each comprise a processor coupled to a memory, and optionally a graphical user interface (GUI), the memory having recorded thereon a computer program comprising instructions for performing one or more steps of the method. The memory may also store a database. The memory is any hardware adapted for such storage, possibly comprising several physical distinct parts (e.g. one for the program, and possibly one for the database). For the using method, the system may be the central server or one of the *n* entities.

Each entity i may store its respective dataset *Dᵢ* in a database. By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The learning method may be included in the using method. In that case, the using method may comprise a first step of performing the learning method for federated learning the deep learning model, and then a second step of using the machine-learnt deep learning model. Alternatively, the learning method may be performed prior to the executing of the using method, and the machine-learnt deep learning model may be recorded on a database. For example, the set of weights predicted at the last iteration may be recorded on the said database (this set of weights being considered as that of the machine-learnt deep learning model). In that case, the using method may comprise a first step of retrieving the recorded machine-learnt deep learning model (e.g., its set of weights) from the database, and then a second step of using the retrieved machine-learnt deep learning model.

The deep learning model machine-learnt in a federated manner according to the learning method may be used in any application using a federated learning model. Examples of applications are now provided.

In a first example of application, the deep learning model machine-learnt may be used for predicting attacks for service operators (e.g. telephone operators). In that case, the entities may be service operators each storing a respective database containing information on a historical of attacks, e.g. that have occurred in the past (for example, with data from their customers, e.g., such as LOG files). Each entity (operator) may want to keep its respective database confidential, for example because of the customer data it holds, but is interested in having a model capable to predict any type of attack. The deep learning model may be configured for taking as input information about system activities (e.g., a LOG file) and for outputting information about a potential attack (e.g., a probability of being attacked and/or a type of attack). By performing the learning method, the deep learning model is machine-learnt based on the attacks encountered by all the entities (instead of just one) and this therefore more robust, more relevant and more accurate as it has been trained also on attacks experienced by other entities. Moreover, the learning is carried out without the entities having to share their personal data.

In a second example of application, the entities may be hospitals, and the deep learning model machine-learnt may be used in medicine, e.g., for predicting a disease as a function of patient data such medical image(s). In that case, the respective dataset of each hospital may comprise data of patients who have visited the hospital. Hospitals may do not want to share their data because there are patient-specific, but are, however, interested in such a model. Indeed, a deep learning model machine-learnt using the learning method is trained on patient data from all the hospitals (instead of just one) and this therefore more robust, more relevant and more accurate as it has been also trained on patients of other hospitals.

In a third example of application, the deep learning model machine-learnt may be used for predicting what a user is currently writing. In that case, the entities may be personal computers, and the respective dataset of each personal computer may include texts written by the user of the personal computer. The learning method enables learning a model based on the data from all personal computers, without having to share with the server the texts written by the users of these personal computers (which may include personal data).

All the steps of the learning method are now discussed in more detail. In particular, one iteration is presented. However, when the learning method performs several iterations before converging, these details equally apply to each of the performed iterations.

The central server may be configured for performing the steps S10, S30, S40, S50 and S60. At each iteration, a portion of the *n* entities (m entities) are configured for performing the steps S21, S22 and S23 (i.e., each of them performs these steps). For some of the iterations (e.g., all), all the *n* entities may perform these steps. In other words, the portion of the entities may include all the entities (i.e., m = *n).* However, in examples, for at least one iteration, one or more entities of the *n* entities may not perform these steps (i.e., the one or more entities may not be involved in the learning for the one or more iteration). In other words, the at least a portion (m) of the *n* entities may not include all the entities (m < *n).* The one or more entities not performing these steps may not be the same at each iteration. In other words, the portion (m) of the *n* entities performing the steps S21, S22 and S23 may vary at each iteration. At each iteration, the one or more entities may not be involved because they are unable to perform these steps, for example due to a technical problem such as a loss of internet connection.

The sending S10, by the central server, of the initial deep learning model (*M*) to each of the *n* entities may be performed in any manner. For example, the learning method may comprise an initial step of initializing deep learning model (*M*), e.g., according to the task and/or to the data to be used as input by the model (*M*). Then, the initialized model *(M)* may be sent to each entity. The model *(M)* may be any deep learning model comprising an initial set of weights which are modified during the machine-learning of the model so that it provides output responses as close as possible to the original values of the considered training dataset. The model (*M*) may be configured for being trained with the respective dataset (*Dᵢ*) of each of the *n* entities. The model (*M*) may also be configured for being trained with any sub-dataset of the respective dataset (*Dᵢ*) of each of the *n* entities (resulting from the partitioning). Each entity may be connected with the central server (e.g., via a wired or Internet connection). The initial deep learning model (*M*) may be sent to each of the *n* entities using this connection.

After the sending S10 of the model (*M*), the steps S21 to S60 are repeated iteratively until convergence. In particular, at each iteration, each entity *i* of at least a portion (*m*) of the *n* entities performs the steps S21, S22 and S23 (i.e., *m* entities of the *n* entities perform these steps, with *m* ≤ *n),* and then, the central server performs the steps S30 to S60. In examples, for each entity i, the step of partitioning of the respective dataset (*Dᵢ*) may be repeated at each iteration. In other words, the resulting sub-datasets (*D*_{*i*1} U *D*_{*i*2} U ... ∪ 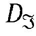 ) may vary at each iteration. Alternatively, the same partitioning may be used at each iteration. In that case, the step of partitioning of the respective dataset (*Dᵢ*) may be performed only once at the first iteration. Alternatively yet, some entities may repeat the step of partitioning, while other may use the same partitioning for each iteration.

For each entity *i* of the *m* entities (i.e., of the at least a portion of the *n* entities), the partitioning S21 of the respective dataset (*Dᵢ*) of the entity *i* into a set of m sub-datasets (*D*_{*i*1} U *D*_{*i*2} U ... ∪ 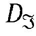 ) may be performed in any manner. The partitioning S21 may use any algorithm to divide the respective dataset (*Dᵢ*) into *m* sub-datasets. For example, the partitioning S11 may be performed randomly or using any existing partitioning methods. For example, the respective dataset (*Dᵢ*) may comprise a predetermined number of training samples, and the partitioning S21 may comprise forming *m* sub-datasets each including a respective portion of these training samples (i.e., attributing, to each training sample, a sub-dataset *Dᵢⱼ*). The resulting *m* sub-datasets may have the same size or not.

Each entity *i* of the m entities trains S22 the initial deep learning model *(M)* with the respective dataset (*Dᵢ*) of the entity (i.e., with all the training samples). The training S22 of the initial deep learning model (*M*) with the respective dataset (*Dᵢ*) comprises modifying the initial set of weight of the model (*M*), thereby obtaining the first set of weights (*Wᵢ*). Each entity *i* of the at least a portion (*m*) of the *n* entities also trains S22 the initial deep learning model *(M)* with each sub-dataset *Dᵢⱼ* of the respective dataset (*Dᵢ*). This results in m respective second sets of weights (*W*_{*i*1} ∪ *W*_{*i*2} U ... ∪ 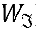 ) (one for each sub-dataset *Dᵢⱼ*). The step of training S22 thus results in the formation of *m* + 1 sets of weights for each entity *i* of the at least a portion (*m*) of the *n* entities. The formed sets of weights may comprise the same number of weights (they are sets of weights of a same model), but the values of the weights may be different between the sets.

After the training S23, each entity *i* of *m* entities sends S23 all of the sets of weights formed on the basis of its respective dataset (*Dᵢ*) (and sub-datasets (*D*_{*i*1} U *D*_{*i*2} ∪ ... ∪ 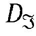 ) thereof) (i.e., the first set of weights *Wᵢ* and the respective second sets of weights *W*_{*i*1} U *W*_{*i*2} U ... ∪ 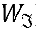 ) to the central server. The sending S23 of all the sets of weights may be performed in any manner, e.g., using the same connection as for the sending S10 of the initial deep learning model (*M*).

The learning method then comprises the building S30, by the server, of the training dataset of training samples from all the sets of weights sent. The building S30 of the training dataset may comprise determining each of the training samples of the training dataset. In particular, the building S30 may comprise the determining of a respective training sample for each entity i of at least a portion (*m*) of the *n* entities. The resulting training dataset thus comprises m training samples. In particular, the resulting training dataset comprises, for each entity *i* of the at least a portion (*m*) of the *n* entities, a respective training sample including the *m* respective second sets of weights (*W*_{*i*1} U *W*_{*i*2} U ... ∪ 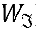 ) sent by the entity *i* as features and the first set of weights (*Wᵢ*) sent by the entity *i* as target.

The learning method then comprises the training S40 a regression model based on the built training dataset of training samples. During this step, the regression model is trained to predict the first set of weights (*Wᵢ*) sent by the entity *i* (defined as target in the training dataset) based on the m respective second sets of weights (*W*_{*i*1} U *W*_{*i*2} U ... ∪ 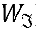 ) sent by the entity *i* (defined as features in the training dataset). The regression model is thus trained to aggregate *m* sets of weights into a single set of weights. The regression model may be any regression model trainable to perform such aggregation of sets of weights, such as an aggregation artificial neural network (ANN) or any other regression model.

After the training S40, the regression model is used for predicting S50 a set of weights (*W*) based on all the first sets of weights (*Wᵢ*) sent by the entities. In other words, the trained regression model is applied to the m first sets of weights (*Wᵢ*) sent by the m entities involved for this iteration, and outputs the set of weights (*W*) (which is an aggregation of the m first sets of weights (*Wᵢ*) taken as input). This outputted set of weights (*W*) is the set of weights (*W*) found by the regression model for the model (*M*) during this iteration. This set of weights (*W*) is then sends S60 to each entity for updating the first and the m second deep learning models (*Mᵢ, M_{i,j}*) for the next iteration. In examples, the updating of the first and the *m* second deep learning models (*Mᵢ, M_{i,j}*) for the next iteration comprises replacing the first and the *m* second sets of weights by the predicted set of weights (*W*). In other words, at the next iteration, the first and the *m* second deep learning models (*Mᵢ, M_{i,j}*) are trained during step S22 starting from this set of weights (*W*), i.e., the weights are modified from this set of weights (*W*) instead of the initial set of weight (i.e., instead of the model as initialized and sent at step S10).

The learning method may stop to iterate when the resulting set of weights (*W*) computed at each iteration converges. For example, the learning method may comprise, at each iteration, computing a difference between the set of weights (*W*) predicted at the current iteration and that predicted at the previous iteration, and stopping to iterate when this difference is lower than a threshold. The learning method may use any other convergence criterion. The set of weights resulting from the federated learning of the deep learning model may be the one predicted by the regression model at the last iteration performed.

In examples, the regression model may be re-initialized at each iteration. For example, the training S40 of the regression model may comprise, at each iteration, initializing the regression model (i.e., initializing its set of weights to initial values that are the same at each iteration, such as null values) and training the initialized regression model (i.e., from its initial position). Alternatively, at each iteration, the regression is trained from the regression model resulting from the last iteration. In that case, the regression model may be initialized for the first iteration, and not for other successive iterations (i.e., it is trained on the basis of the weights defined in the previous iteration).

With reference to the figures, an example of implementation of the learning and using methods is not presented.

Advantages of the learning and using methods are now presented. The methods form a generic approach, independent of the federation learning application domain, since it is based on a deep learning model for aggregation, thus eliminating the need for a predefined aggregation function. In this approach, the server-level learning model (i.e., the regression model) strives to find the optimal aggregation function. Moreover, the methods efficiently resolve the non-IID data challenge in federation learning. Furthermore, the server-level learning model (i.e., the regression model) is easily customizable, offering the option of using or defining the desired aggregation learning model. The learning method also provides faster convergence on the test dataset. Additionally, the methods are efficient for federated Cross Silos learning (involving clients in the form of organizations).

For each iteration (i.e., training round) in federation learning, the central server initializes a machine-learning model (the deep learning model *M*) and passes it on to selected clients (i.e., the *m* entities) participating in the training for that round. Each client independently trains the model using its local respective dataset (*Dᵢ*), then transmits the model weights back to the central server. After receiving all the weights from the clients participating in the round, the server aggregates these weights using a specified aggregation method. The server then proceeds to select the customers who will participate in the next round. The learning method may thus comprise, at each iteration, a step of selecting the at least a portion of the entities participating to the training round. This iterative process continues until model convergence is achieved, producing accurate predictions.

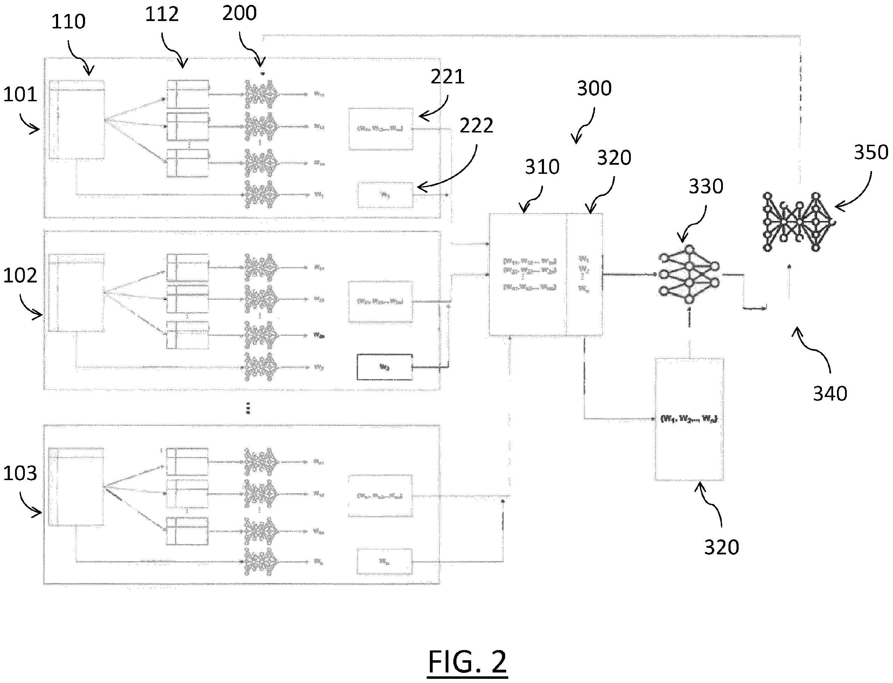

It is proposed an innovative approach to aggregating client weights using an artificial neural network (ANN) model. The main objective of this ANN is to find a function capable of aggregating the weights of different local user models to form a global model. This becomes particularly relevant in scenarios where the user data presents non-IID characteristics, as conventional methods such as the FedAvg method in federation learning encounter difficulties in efficiently aggregating models under such heterogeneous data. In the following, it is presented an overview of the main steps of the learning and using methods, together with schematics of the architecture (see FIG. 1 and 2).

In this example, it is considered a scenario with a set of users 101, 102, 103 (or entities or clients) *U* = {*U*₁ ∪ *U*₂ U ... U *Uₙ*} each with a non-IID dataset *Dᵢ* 110. The aim is to build a federate model trained on the datasets of the users *D* = {*D₁* ∪ *D*₂ ∪ ... ∪ *Dₙ*}*.*

The first step S10 is an initialization step: the central server initializes a deep learning (DL) model 350, referred to as *M,* and transmits this initial model to all the participating users *Uᵢ*.

The second step S21 is a dataset partitioning step: each user *Uᵢ* (or client) randomly divides its dataset *Dᵢ* 110 into *n* non-IID subsets 112, resulting in {*D*_{*i*1} U *D*_{*i*2} U ... U *Dᵢₙ*}, where n represents the number of users (in this example, all the clients are involved at each iteration, thus *m* = *n*)*.*

The third step (S22 and S23) is a local model training step: each user *Uᵢ* trains the deep learning (DL) model M with his dataset *Dᵢ* and the *n* non-IID subsets created *Dᵢⱼ.* They then transmit to the server the weights *Wᵢ* of the local model trained with *Dᵢ* and the weights of the models trained with the subsets *FWᵢ* = {*W*_{*i*1} U *W*_{*i*2} U ... U 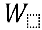 }.

The fourth step S30 is a step of building the server dataset 300: the server builds a dataset using the weights received from all users. The weights of the local sub-models *Wᵢⱼ* serve as features 310, and the weights of the local models *Wᵢ* represent the target to be predicted 320, where the features are {*Wᵢⱼ* |*i,j* E [1,*n*]} and the target is {*Wᵢ*|*i* E [1, *n*]}.

The fifth step S40, S50 is an aggregation model training step: the server trains an artificial neural network (ANN) 330 using the dataset created from the client weights. After training, the server uses the ANN to predict W 340 using as input 320 (representing the weights of the global model *M*) from the *Wᵢ* with i ∈ [1, *n*]. The prediction results are then sent back S60 to all participating clients.

The learning method is an iterative process (including rounds, or tours): steps 3-5 are repeated until convergence of the federated model is achieved.

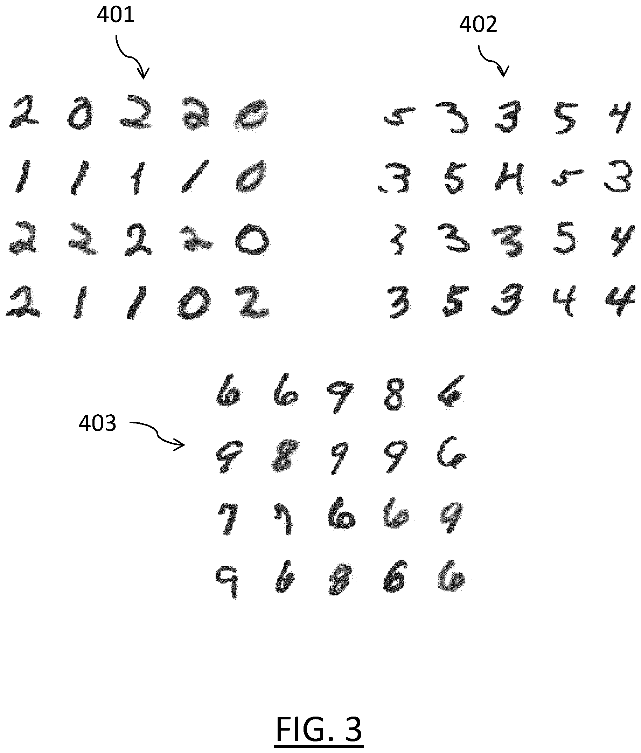

Results of the learning and using methods are now presented. In particular, the results obtained using the learning and using methods (hereinafter referred to as "FedEstimate approach") are compared with those obtained using the existing FedProx method in order to assess the efficiency and speed of convergence of the two methods. The tests are carried out on the MNIST (Modified National Institute of Standards and Technology) image database, which is a vast collection of handwritten digits. It is widely used to train various non-IID image processing systems), using three distinct clients (or users). FIG. 3 shows the distribution of data between three clients 401, 402, 403. It can be clearly seen that the data do not follow an identical distribution between the clients. In fact, each client holds a specific subset of MNIST images, creating a significant disparity. Specifically, the first client 401 has only images of digits 0, 1 and 2, the second client 402 has images of digits 3, 4 and 5, while the third client 403 has images of digits 6, 7, 8 and 9.

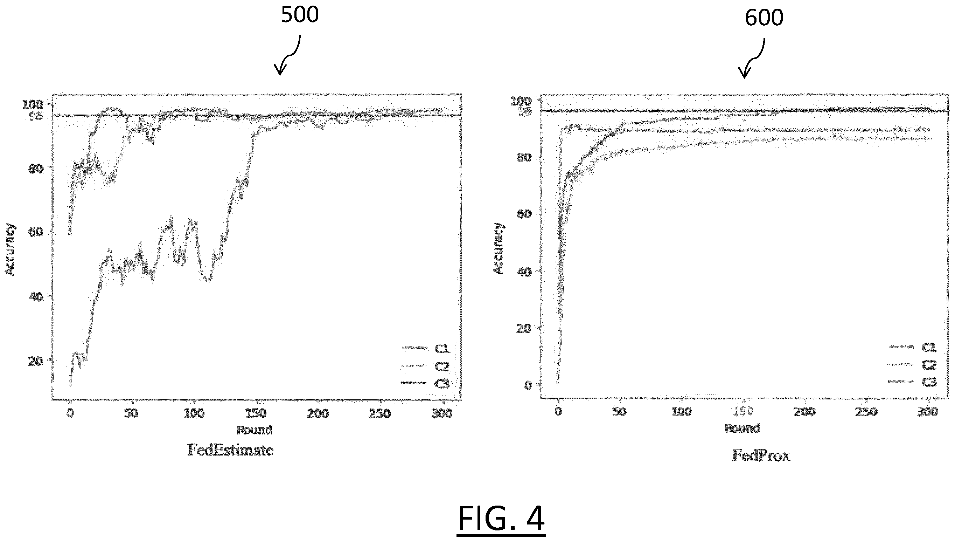

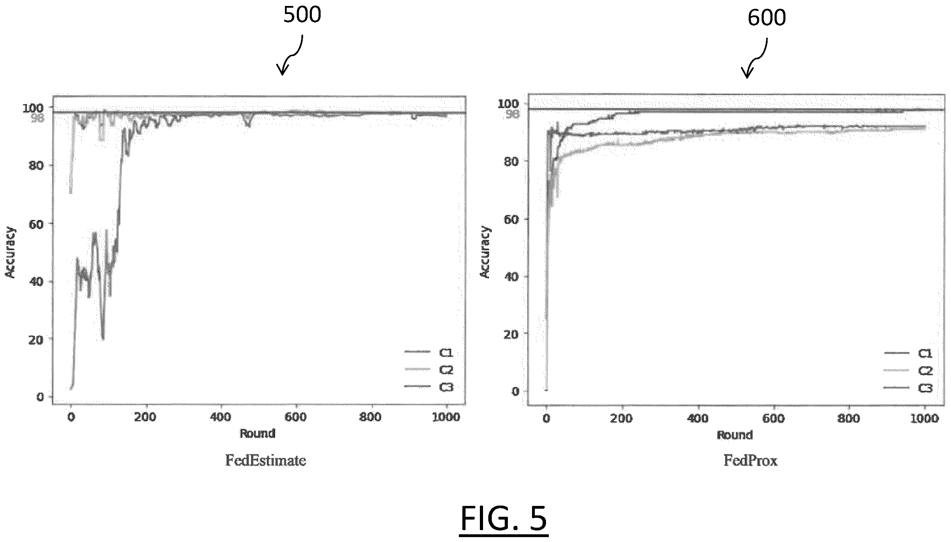

FIGs. 4 and 5 show the accuracy obtained at each iteration using the FedEstimate approach 500 and the existing FedProx method 600 on MNIST non-IID (for 300 iterations in FIG. 4 and for 1000 iterations in FIG. 5). As illustrated in these figures, the FedEstimate approach 500 converges for all 3 clients C1, C2 and C3, all exceeding 98% accuracy after 200 iterations, unlike the FedProx method 600 where only one client exceeds 98%, while the other two converge to just 91% and 92% respectively after 1000 iterations. These results show that the learning and using methods achieve faster convergence than the FedProx method.

The learning and using methods find its relevance in all areas where Federated Learning is deployed, particularly in situations where organizations seek to collaborate to train an optimal learning model without disclosing their heterogeneous data (non-IID). It is easily exploitable in different prediction problems.

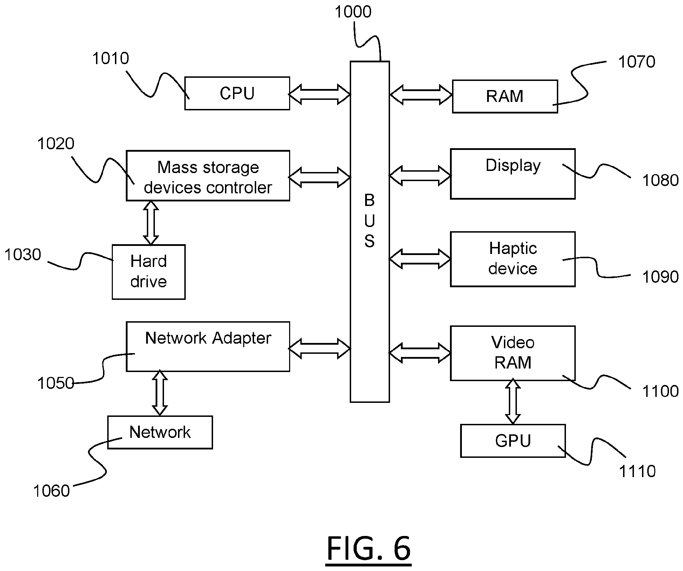

FIG. 6 shows an example of a system (e.g., of an entity), wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for federated learning a deep learning model, the method being implemented on a system comprising a central server and *n* entities, each entity storing a respective dataset (*Dᵢ*), the method comprising:
- sending (S10), by the central server, an initial deep learning model (*M*) to each of the *n* entities; and
- iteratively repeating, until convergence, the steps of:
-- by each entity *i* of at least a portion (*m*) of the *n* entities:
--- partitioning (S21) the respective dataset (*Dᵢ*) of the entity *i* into a set of m sub-datasets (*D*_{*i*1} U *D*_{*i*2} U ... ∪ 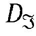 );
--- training (S22) the initial deep learning model (*M*) sent by the central server with:
• the respective dataset (*Dᵢ*) of the entity, thereby obtaining a first deep learning model (*Mᵢ*) having a first set of weights (*Wᵢ*); and
• each sub-dataset of the sub-datasets (*D*_{*i*1} U *D*_{*i*2} U ... ∪ 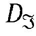 ), thereby obtaining respective second deep learning models (*M_{i,j}*) each having a respective second set of weights (*W*_{*i*1} ∪ *W*_{*i*2} U ... U 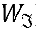 );
--- sending (S23) the first set of weights (*Wᵢ*) and the respective second sets of weights (*W*_{*i*1} U *W*_{*i*2} U ... ∪ 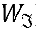 ) obtained for the entity *i* to the central server;
-- building (S30), by the server, a training dataset of training samples from all the sets of weights sent by the at least a portion (*m*) of the *n* entities, the training dataset comprising, for each entity *i* of the at least a portion (*m*) of the *n* entities, a respective training sample including the respective second sets of weights (*W*_{*i*1} U *W*_{*i*2} U ... ∪ 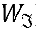 ) sent by the entity *i* as features and the first set of weights (*Wᵢ*) sent by the entity i as target;
-- training (S40) a regression model based on the built training dataset of training samples;
-- predicting (S50), using the trained regression model, a set of weights (*W*) based on all the first sets of weights (*Wᵢ*) sent by the entities; and
-- sending (S60) the predicted set of weights (*W*) to each entity for updating the first and the second deep learning models (*Mᵢ, M_{i,j}*) for the next iteration.

2. The method of claim 1, wherein the respective dataset (*Dᵢ*) stored by each entity is confidential.

3. The method of claim 1 or 2, wherein the regression model is an aggregation artificial neural network (ANN).

4. The method of any one of claims 1 to 3, wherein the updating of the first and the second deep learning models (*Mᵢ, M_{i,j}*) for the next iteration comprises replacing the first and the second sets of weights by the predicted set of weights (*W*).

5. The method of any one of claims 1 to 4, wherein, for at least one first iteration, the at least a portion (m) of the *n* entities includes all of the *n* entities (*m* = *n*)*.*

6. The method of any one of claims 1 to 5, wherein, for at least one second iteration, one or more entities of the *n* entities are not included in the at least a portion (m) of the *n* entities (*m* < *n*)*,* the method further comprises, for each of the at least one second iteration, selecting the portion (m) of the *n* entities.

7. The method of any one of claims 1 to 6, wherein the partitioning (S21) the respective dataset (*Dᵢ*) of the entity i is performed randomly.

8. The method of any one of claims 1 to 7, wherein the training (S40) the regression model comprises, at each iteration:
- initializing the regression model; and
- training the initialized regression model.

9. The method of any one of claims 1 to 7, wherein, at each iteration, the regression is trained from the regression model resulting from the last iteration.

10. A method of use of a deep learning model machine-learnt according to the method of any of claims 1 to 9.

11. A computer program comprising instructions which, when the program is executed by a computer, cause the computer to carry out the method of any of claims 1 to 9 and/or the method of claim 10.

12. A computer readable storage medium having recorded thereon a computer program of claim 11.

13. A central server comprising means for carrying out the method of any of claims 1 to 9 and/or the method of claim 10.

14. An entity comprising means for carrying out the method of any of claims 1 to 9 and/or the method of claim 10.

15. A system comprising a central server according to claim 13 and n entities according to claim 14, the system being configured for implementing the method of any of claims 1 to 9 and/or the method of claim 10.
